# EUROPÄISCHE PATENTSCHRIFT

(11) **EP 1 839 820 B1**
(45) Veröffentlichungstag und Bekanntmachung des Hinweises auf die Patenterteilung: **18.06.2008**
(21) Anmeldenummer: 06006353.4
(22) Anmeldetag: 28.03.2006
(51) Int. Cl.: B25J 15/00

(54) **Handhabungsvorrichtung mit einer Trägereinheit mit mehreren Arbeitsmodulen**
Manipulating device with a support unit with a plurality of working modules
Dispositif de manipulation avec une unité de support avec plusieurs modules de travail

(43) Veröffentlichungstag der Anmeldung: 03.10.2007
(73) Patentinhaber: FESTO AG & Co, 73734 Esslingen (DE)
(72) Erfinder: Waldmann, Dieter, 73061 Ebersbach (DE); Freund, Michael, Dipl.-Ing., 73099 Adelberg (DE); Feyrer, Thomas, Dipl.-Ing., 73734 Esslingen (DE); Heinzl, Jürgen, 73249 Wernau (DE)
(74) Vertreter: Vogler, Bernd

(56) Entgegenhaltungen:
- DE-A1- 10 128 185
- FR-A- 2 707 912
- US-A1- 2004 130 085
- US-A1- 2005 008 469

## Beschreibung

Die Erfindung betrifft eine Handhabungsvorrichtung zur Handhabung von Teilen, insbesondere Karosserieblechen, mit einer Trägereinheit, die eine Kopplungsstelle zur Ankopplung an einen Roboterarm eines Roboters und mehrere jeweils wenigstens eine Befestigungsschnittstelle zur Befestigung eines Arbeitsgerätes wie Vakuumsauggreifer oder dergleichen aufweisende Arbeitsmodule aufweist, wobei jedem Arbeitsmodul Einstellmittel zur Positionseinstellung der Befestigungsschnittstelle zugeordnet sind, wobei die Einstellmittel mehrere mittels von einem Steuergerät stammenden elektrischen Steuerbefehlen ansteuerbare Positionier-Stellantriebe aufweisen, die es ermöglichen, die Befestigungsschnittstelle in x-, y- und z-Richtung eines durch x-, y- und z-Koordinaten aufgespannten kartesischen Koordinatensystems zu verlagern, wobei die Positionier-Stellantriebe derart ausgebildet sind, dass die Befestigungsschnittstelle durch Bewegung in x-, y- und/oder z-Richtung in eine gewünschte Sollposition positionierbar ist.

In der US 2004/130085 A1 ist eine derartige Handhabungsvorrichtung offenbart, mit einer mittleren Trägereinheit, an der drei Spindelantriebe in X-Richtung verstellbar gelagert sind. Von einem jeweiligen Spindelantrieb ragen links und rechts, also in Y-Richtung, Stellspindeln ab, an denen weitere zur Verstellung in Y-Richtung dienende Stellantriebe verstellbar gelagert sind. An diesen Y-Spindelantrieben sitzt jeweils eine Saugeinrichtung. Insofern kann jeder in Reichweite liegende Punkt in der X-Y-Ebene erreicht werden. Ferner ist eine Z-Verstellung möglich, in der Art, dass der Saugteller an einem flexiblen, spindelartigen Schaft sitzt, der in Z-Richtung mittels seines Zahnradgetriebes auf- bzw. abwärts bewegbar ist.

Eine Handhabungsvorrichtung ist beispielsweise auch aus der DE 100 64 974 A1 bekannt, in der ein modulares Greifersystem beschrieben ist, dass aus Trägerohren aufgebaut ist, die mittels Verbindungsmitteln, beispielsweise Rohrschellen, derart miteinander verbindbar sind, dass die Trägerrohre um quer zu ihrer Längsachse verlaufende Drehachsen gegeneinander verdrehbar sind. Am Ende eines aus wenigstens zwei Trägerrohren aufgebauten Moduls ist eine Halte- oder Aufnahmeeinrichtung in Form eines Vakuumgreifers oder dergleichen angeordnet. Die Position der Halte- oder Aufnahmeeinrichtung kann durch Verschwenken der Trägerrohre innerhalb ihres jeweiligen Schwenkbereichs variiert werden, so dass das Greifersystem durch Positionseinstellung der Halte- und Aufnahmeeinrichtungen an Teile unterschiedlicher Art anpassbar ist.

Die Positionseinstellung ist gemäß der DE 100 64 974 A1 jedoch infolge der über Verbindungsmittel verschwenkbar aneinander gelagerten Trägerrohre zeitaufwändig, so dass bei einer Neupositionierung der Halte- und Aufnahmeeinrichtung der Arbeitsablauf doch nicht unerheblich verzögert wird. Außerdem hängt die Positionseinstellung vom Schwenkwinkel der Trägerrohre ab, so dass nicht jede beliebige Position einstellbar ist.

Aufgabe der Erfindung ist es, eine Handhabungsvorrichtung der eingangs genannten Art zu schaffen, die eine hohe Flexibilität bei der Handhabung von Teilen unterschiedlicher Art aufweist.

Diese Aufgabe wird durch eine Handhabungsvorrichtung mit dem Merkmalen des unabhängigen Anspruchs 1 gelöst. Weiterbildungen der Erfindung sind in den Unteransprüchen dargestellt.

Die erfindungsgemäße Handhabungsvorrichtung zur Handhabung von Teilen, insbesondere Karosserieblechen, zeichnet sich dadurch aus, dass die Positionier-Stellantriebe eines jeden Arbeitsmoduls derart ausgebildet sind, dass die Befestigungsschnittstelle eines jeweiligen Arbeitsmoduls unabhängig von den Befestigungsschnittstellen der anderen Arbeitsmodule in die gewünschte Sollposition positionierbar ist.

Durch die Positionier-Stellantriebe ist also eine "automatische" Neupositionierung der Befestigungsschnittstellen und somit der daran zu befestigenden Arbeitsgeräte mittels vorgegebener Steuerbefehle möglich. Die Befestigungsschnittstellen können daher beispielsweise innerhalb weniger Sekunden in die neue gewünschte Sollposition gebracht werden, so dass beispielsweise eine Neupositionierung zwischen zwei Teilehüben möglich ist, ohne dass eine Verzögerung im Arbeitsablauf eintritt. Außerdem ist jeder Befestigungsschnittstelle ein durch die x-, y- und z-Koordinaten aufgespannter würfelartiger Positionierbereich zugeordnet, innerhalb dessen die Befestigungsschnittstelle in jede beliebige Position gefahren werden kann. Der Positionierbereich ist lediglich durch die Stell-Reichweite der Positionier-Stellantriebe begrenzt.

Wie bereits erwähnt, können die Positionier-Stellantriebe unabhängig voneinander betätigt, insbesondere unabhängig voneinander angesteuert werden, so dass die Befestigungsschnittstellen eines jeweiligen Arbeitsmoduls unabhängig von den Befestigungsschnittstellen anderer Arbeitsmodule der Handhabungsvorrichtung in die gewünschte Sollposition positionierbar ist.

In besonders bevorzugter Weise weisen die Positionier-Stellantriebe eines jeweiligen Arbeitsmoduls unabhängig voneinander verfahrbare Stellelemente auf, die jeweils einerseits über Kopplungsmittel mit einer Antriebseinheit gekoppelt sind und andererseits eine Abgriffsschnittstelle zum Abgreifen der in x-, y- oder z-Richtung gerichteten Stellelementbewegung oder die Befestigungsschnittstelle aufweisen.

Besonders bevorzugt weist ein jeweiliges Arbeitsmodul einen ersten Positions-stellantrieb und einen zweiten Positions-Stellantrieb mit ersten bzw. zweiten Stellelementen zum verfahren in der xy-, xz- oder yz-Ebene und einen dritten Positionier-Stellantrieb zum Verfahren in der z-, y- oder x-Richtung auf, vorausgesetzt die Trägereinheit befindet sich in waagrechter Lage. Selbstverständlich ist es auch möglich, dass die Trägereinheit eine senkrechte Lage einnimmt, wobei dann die ersten und zweiten Stellelemente zum Verfahren in der zx- oder zy-Ebene und der dritte Positionier-Stellantrieb zum Verfahren in der x bzw. y-Richtung vorgesehen ist.

Zweckmäßigerweise sind die ersten und zweiten Stellelemente in gleicher Raumrichtung unabhängig voneinander verfahrbar, wobei deren Abgriffsschnittstellen über eine Kopplungsbrücke zur Erzielung einer Bewegung in einer senkrecht zur Stellelementbewegung des ersten bzw. zweiten Stellelements gerichteten Raumrichtung miteinander gekoppelt sind. Eine Bewegung der Befestigungsschnittstelle beispielsweise in y-Richtung kann dadurch durch Bewegung der ersten und zweiten Stellelemente in x-Richtung erreicht werden. Alternativ ist es möglich, drei Stellelemente vorzusehen, von denen ein erstes in x-Richtung, ein zweites in y-Richtung und ein drittes in z-Richtung verfahrbar ist.

Damit die Neupositionierung der Befestigungsschnittstellen zuverlässig durchgeführt werden kann, beispielsweise mittels Ansteuerung durch ein einem bestimmten Stellweg zugeordneten Steuersignals, kann jedem Stellelement eine entlang seines Verfahrwergs liegende Startposition zugeordnet sein, die auch als "Home-Position" bezeichnet werden könnte. Von dieser Startposition aus wird dann die gewünschte Sollposition der Befestigungsschnittstelle angefahren. Der Startposition können Positionserfassungsmittel zur Erfassung des Überfahrens derselbigen durch das Stellelement zugeordnet sein. Die Positionserfassungsmittel sind beispielsweise als Positionssensoren, insbesondere Näherungsschalter, ausgebildet.

In besonders bevorzugter Weise werden die Positionier-Stellantriebe von motorischen Linearantrieben gebildet. Es sind jedoch auch pneumatische oder hydraulische Linearantriebe einsetzbar. In besonders bevorzugter Weise werden die motorischen Linearantriebe von Spindelantrieben gebildet, mit jeweils einem Kopplungsmittel in Form einer Stellspindel, die einerseits von einer Antriebseinheit in Form eines Spindelmotors über Antriebsmittel antreibbar ist und an der andererseits das Stellelement linear beweglich geführt ist. Es können auch Lineardirektantriebe eingesetzt werden. Als Alternative zum Spindelantrieb ist beispielsweise auch ein Zahnriemen-Antrieb einsetzbar.

Bei einer Weiterbildung der Erfindung ist der Befestigungsstelle eines jeweiligen Arbeitsmoduls ein Drehantrieb zugeordnet, so dass die Befestigungsschnittstelle verschwenkt werden kann, beispielsweise um eine im Wesentlichen senkrecht zur durch die Befestigungsschnittstelle aufgespannten Schnittstellenebene verlaufenden Schwenkachse. Dadurch wird ermöglicht, das an der Befestigungsschnittstelle befestigte Arbeitsgerät zu verschwenken.

Damit die Handhabungsvorrichtung auch in einer Schweißatmosphäre, beispielsweise in der Nähe von Schweißrobotern eingesetzt werden kann, können die Positionier-Stellantriebe Schutzabdeckungen zu deren Schutz vor Schweißspritzern aufweisen. Die Schutzabdeckungen können aus schweißspritzerresistenten Blechen und/oder Metallbürsten gebildet sein. Die schweißspritzerresistenten Bleche bieten sich vor allem zum großflächigen Abdecken der Positionier-Stellantriebe an, während die Metallbürsten durch die Biegsamkeit ihrer Bürstenhaare zum Abdecken der Stellen geeignet sind, die durch bewegliche Teile überfahren werden.

Bei einer Weiterbildung der Erfindung weist die Handhabungsvorrichtung wenigstens ein Steuergerät zur Ansteuerung der Positionier-Stellantriebe mittels elektrischer Steuersignale auf. Das Steuergerät kann an der Trägereinheit vorgesehen oder extern angeordnet sein, wobei im letzteren Fall die Signalübertragung mittels elektrischer Steuerleitungen oder drahtlos, beispielsweise per Funk oder optisch, erfolgen kann. Es ist auch möglich, dass das Steuergerät am Roboterarm angeordnet ist und /oder die Robotersteuerung zur Ansteuerung der Positionier-Stellantriebe verwendet wird.

Ein bevorzugtes Ausführungsbeispiel der Erfindung ist in der Zeichnung dargestellt und wird im Folgenden näher erläutert. In der Zeichnung zeigen:
- Figur 1: eine perspektivische Darstellung eines bevorzugten Ausführungsbeispiels der erfindungsgemäßen Handhabungsvorrichtung,
- Figur 2: eine vergrößerte Darstellung eines einzelnen Arbeitsmoduls der Handhabungsvorrichtung von Figur 1,
- Figur 3: eine perspektivische, teilweise aufgeschnittene Darstellung des mit der Befestigungsschnittstelle versehenen Positionier-Stellantriebs und
- Figur 4: eine teilweise geschnittene Seitenansicht auf den Positionier-Stellantrieb von Figur 3.

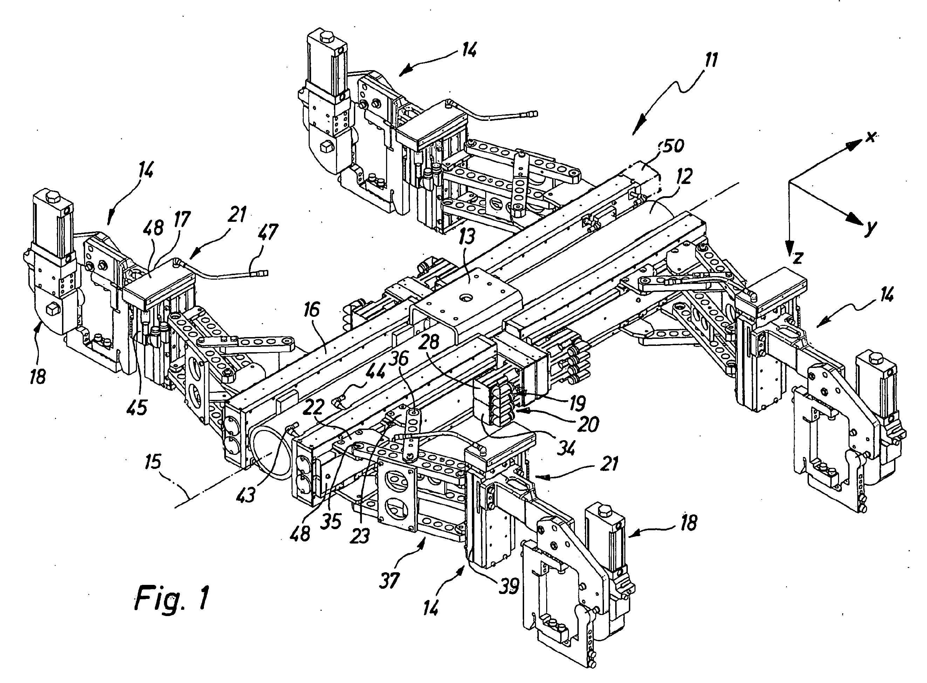

Figur 1 zeigt ein bevorzugtes Ausführungsbeispiel der erfindungsgemäßen Handhabungsvorrichtung 11. Eine derartige Handhabungsvorrichtung 11 wird insbesondere in Zusammenhang mit der Handhabung von Teilen, insbesondere Karosserieblechen, eingesetzt. Die Handhabungsvorrichtung 11 wird im Fachjargon auch häufig als "Saugerspinne" bezeichnet. Die Handhabungsvorrichtung 11 besitzt eine Trägereinheit 12, die in Figur 1 beispielhaft in zylindrischer Gestalt gezeigt ist. Die Trägereinheit 12 besitzt eine Kopplungsstelle 13 zur Ankopplung an einen Roboterarm eines Roboters (nicht dargestellt). Die Kopplungsstelle kann beispielsweise von einer an der Oberseite der Trägereinheit 12 angeordneten Adapterplatte 13 ausgebildet sein. Durch die Ankopplung an einen Roboterarm eines Roboters ist ersichtlich, dass die Handhabungsvorrichtung 11 insgesamt in verschiedene Arbeitspositionen gefahren und auch in verschiedene Ausrichtungen bezüglich der aufzunehmenden Teile gebracht werden kann. In der Regel ist die Trägereinheit waagerecht ausgerichtet, um beispielsweise waagrecht abgelegte Karosseriebleche aufzunehmen. An der Trägereinheit 12 sind mehrere Arbeitsmodule 14 befestigt, die, verwendet man die Bezeichnung "Saugerspinne" für die Handhabungsvorrichtung 11, auch als "Füße" bezeichnet werden könnten. In Figur 1 sind in beispielhafter Annahme vier Arbeitsmodule 14 an der Trägereinheit 12 vorgesehen. Es können jedoch auch zwei oder sechs Arbeitsmodule 12 befestigt sein. Selbst das Anbringen von drei oder mehr als sechs Arbeitsmodulen ist denkbar. Es hat sich jedoch die spiegelbildliche Anordnung der gleichen Anzahl an Arbeitsmodulen 14 links und rechts der Trägerlängsachse 15 als praktikabel erwiesen.

Die nachfolgende Beschreibung beschränkt sich der Einfachheit halber auf ein einzelnes Arbeitsmodul 14. Die restlichen Arbeitsmodule 14 sind im Wesentlichen identisch aufgebaut.

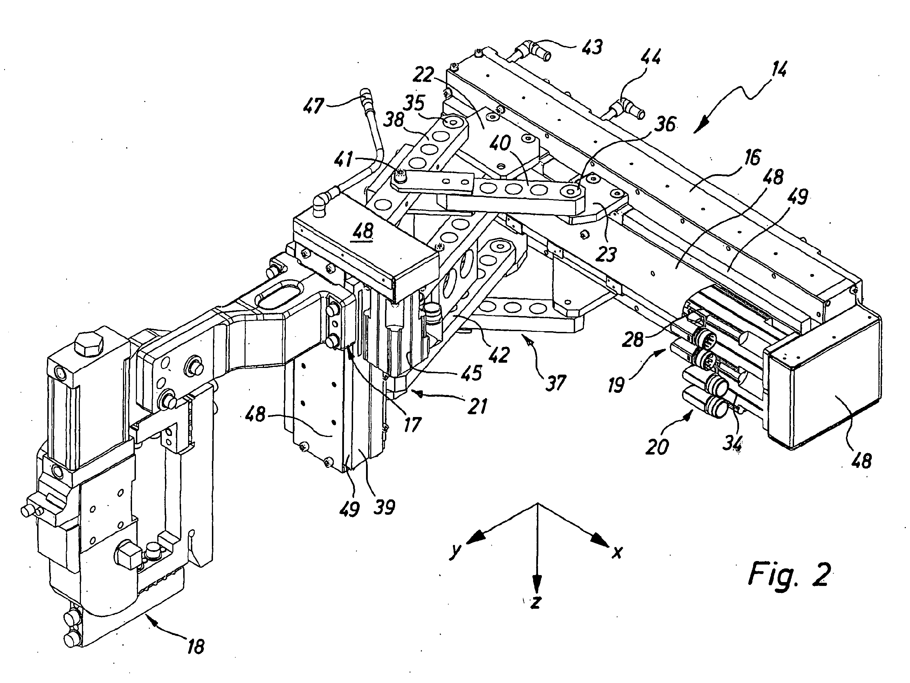

Das Arbeitsmodul 14 ist über ein kastenartiges Modulgehäuse 16 an der Trägereinheit befestigt. Wie insbesondere in Figur 2 dargestellt, besitzt das Arbeitsmodul 14 eine Befestigungsschnittstelle 17 zur Befestigung eines Arbeitsgerätes 18. Als Arbeitsgeräte 18 können beispielsweise Vakuumsauggreifer, motorische Greifelemente, Indexstifte usw. eingesetzt werden. Zudem besitzt das Arbeitsmodul 14 Einstellmittel zur Positionseinstellung der Befestigungsschnittstelle 17, wobei die Einstellmittel mehrere, mittels von einem, hier beispielhaft durch Anordnung an der Trägereinheit 12 gezeigten, Steuergerät 50 stammenden elektrischen Steuerbefehlen ansteuerbare Positionier-Stellantriebe 19, 20, 21 aufweisen. Die Positionier-Stellantriebe 19, 20, 21 ermöglichen es, die Befestigungsschnittstelle in x-, y- und z-Richtung eines durch x-, y- und z-Koordinaten aufgespannten kartesischen Koordinatensystem zu verlagern. Weiterhin sind die Positionier-Stellantriebe 19, 20 und 21 derart ausgebildet, dass die Befestigungsschnittstelle 17 durch Bewegungen in x-, y- und/oder z-Richtung in die gewünschte Sollposition positionierbar ist. Die Positionier-Stellantriebe sind als motorische Linearantriebe 19, 20, 21 ausgebildet und besitzen jeweils ein Stellelement 22, 23, 24, das einerseits über Kopplungsmittel mit einer Antriebseinheit gekoppelt ist und andererseits eine Abgriffschnittstelle zum Abgreifen der in x-, y- oder z-Richtung gerichteten Stellelementbewegung oder die Befestigungsschnittstelle 17 aufweist.

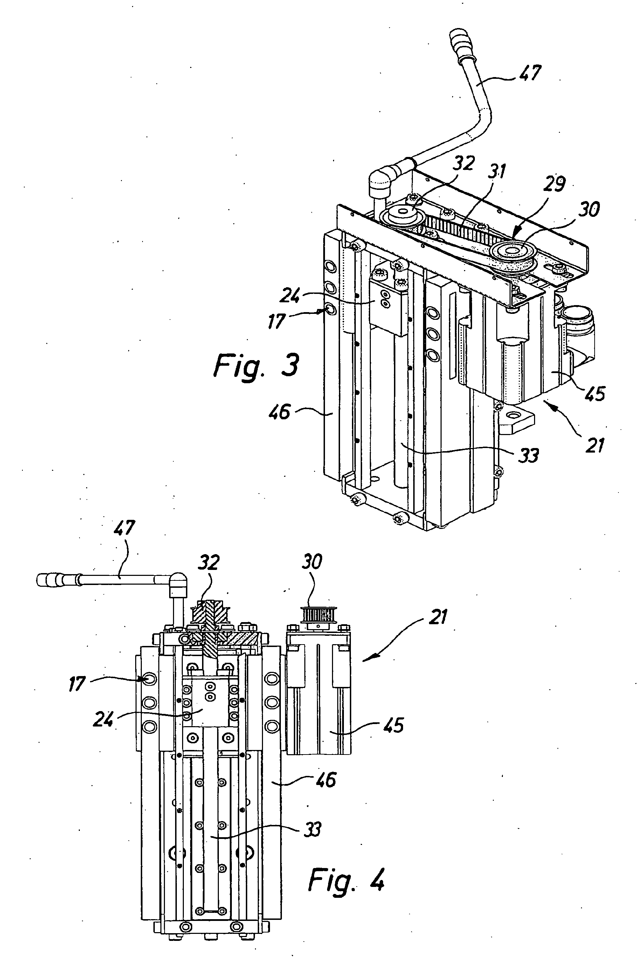

Als motorische Linearantriebe eignen sich insbesondere Spindelantriebe 19, 20, 21. Es ist also ein erster Spindelantrieb 19 vorgesehen, der am und im Modulgehäuse 16 sitzt. Der erste Spindelantrieb 19 besitzt eine Stellspindel (nicht dargestellt), die längs der Trägerlängsachse 15 verläuft und somit für das Verfahren in x-Richtung dient, vorausgesetzt die Trägereinheit 12 befindet sich in einer waagrechten Lage. Die Stellspindel wird durch einen Spindelmotor 28, beispielsweise Servomotor über Antriebsmittel in Form eines Riemengetriebes 29 (Fig. 3) angetrieben. Der erste Spindelmotor 28 sitzt an der Außenseite des Modulgehäuses 16 in mittiger Lage entlang der Trägereinheit 12. Wie insbesondere in Figur 3 dargestellt, besitzt das Riemengetriebe 29 ein erstes Riemenrad 30, das durch eine Antriebswelle des Spindelmotors rotatorisch angetrieben wird. Das erste Riemenrad 30 ist über einen Riemen 31 mit einem zweiten Riemenrad 32 verbunden, das wiederum drehfest an der Stellspindel 33 (Fig. 3) sitzt. An der Stellspindel (nicht dargestellt) des ersten Spindelantriebs 19 ist ein erstes Stellelement in Form eines ersten Führungsschlittens 22 linear beweglich geführt. Der Führungsschlitten 22 ist zudem über eine längs der Stellspindel verlaufende Führungsschiene linear geführt.

Es ist ferner ein zweiter Stellantrieb 20 vorgesehen, der ebenfalls im und am Modulgehäuse 16 sitzt. Die Stellspindel (nicht dargestellt) des zweiten Spindelantriebs 20 ist ebenfalls im Modulgehäuse 16 untergebracht und erstreckt sich längs der Trägerlängsachse 15, zudem ist sie parallel zur Stellspindel des ersten Spindelantriebs 19 angeordnet. Es ist ein zweiter Spindelmotor 34 vorgesehen, der ober- oder unterhalb des ersten Spindelmotors 28 ebenfalls an der Außenseite des Modulgehäuse 16 angeordnet ist und mithin mittig an der Trägereinheit 12 sitzt. Zum Antrieb ist wiederum ein Riemengetriebe vorgesehen, das identisch zum Riemengetriebe des ersten Spindelantriebs 19 aufgebaut ist. An der Stellspindel des zweiten Spindelantriebs 20 ist ein zweites Stellelement in Form eines zweiten Führungsschlittens 23 linear beweglich geführt. Der zweite Führungsschlitten 23 ist zudem an einer Führungsschiene linear beweglich geführt. Zur Führung der Führungsschlitten 22, 23 kann eine Kugelführung, beispielsweise mit Kugelumlaufkäfig, eingesetzt werden. Selbstverständlich sind auch andere Führungsarten denkbar.

Die beiden Führungsschlitten 22, 23 besitzen jeweils eine Abgriffsschnittstelle in Form einer ersten und zweiten Gelenkachse 35, 36, die über eine Kopplungsbrücke in Form eines Scherenhub-Gestänges 37 miteinander verbunden sind. Das Scherenhub-Gestänge 37 besitzt einen ersten Gelenkhebel 38, der einenends über die erste Gelenkachse 35 gelenkig mit dem ersten Führungsschlitten 22 und andernends am Gehäuse 39 des dritten Positionier-Stellantriebs 21 angelenkt ist. Ferner ist ein zweiter Gelenkhebel 40 vorgesehen, der einenends über die zweite Gelenkachse 36 gelenkig mit dem zweiten Führungsschlitten 23 und andernends über eine Schwenkachse 41 am ersten Gelenkhebel 38 schwenkbar gelagert ist. Ferner ist noch ein parallel zum ersten Gelenkhebel 38 angeordneter Stützhebel 42 vorgesehen, der einenends schwenkbar am ersten Führungsschlitten 22 und andernends schwenkbar am Modulgehäuse 39 des dritten Positionier-Stellantriebs 21 angelenkt ist.

Am Modulgehäuse 16 sitzen ferner noch Positionserfassungsmittel in Form von Näherungsschaltern 43, 44 von denen ein erster Näherungsschalter 43 in den Verfahrweg des ersten Führungsschlittens und ein zweiter Näherungsschalter 44 in den Verfahrweg des zweiten Führungsschlittens eingeschaltet ist. Die Näherungsschalter 43, 44 sind einer Startposition bzw. Home-Position des ersten und zweiten Führungsschlittens 22, 23 zugeordnet, wobei ein Überfahren dieser Startposition durch den Näherungsschalter 43, 44 detektierbar ist.

Ferner ist noch ein dritter Spindelantrieb 21 vorgesehen, der am trägereinheitsfernen Ende des Scherenhub-Gestänges 37 sitzt und daher durch die Bewegung des Scherenhub-Gestänges 37 insgesamt mitbewegt werden kann. Der dritte Spindelantrieb 21 besitzt ein Gehäuse 39, in dem eine Stellspindel 33 im Wesentlichen senkrecht zur Trägerlängsachse 15 ausgerichtet gelagert ist. Wie insbesondere in den Figuren 3 und 4 gezeigt wird die Stellspindel 33 durch einen dritten Spindelmotor 45 über ein Riemengetriebe 29 angetrieben. Das Riemengetriebe ist im Wesentlichen identisch zu den Riemengetrieben der ersten und zweiten Spindelantriebe 19, 20 ausgebildet. An der Stellspindel 33 ist wiederum ein Stellelement in Form eines dritten Führungsschlittens 24 linear beweglich geführt, der seinerseits zusätzlich an einer parallel zur Stellspindel 33 ausgerichteten Führungsschiene linear beweglich geführt ist. Der dritte Führungsschlitten 24 ist ferner mit einem U-förmigen Andockteil 46 gekoppelt, an dessen Vorderseite sich die Befestigungsschnittstelle 17 befindet. Auch hier ist in den Verfahrweg des dritten Führungsschlittens ein Näherungsschalter 47 eingeschaltet, und zwar an einer Stelle, die der Startposition des dritten Führungsschlittens 23 zugeordnet ist.

Bei einer nicht dargestellten Alternative ist am Andockteil ein Aufbauteil befestigt, dem ein Drehantrieb, beispielsweise in Form eines Schwenkflügelantriebs, zugeordnet ist. Die Befestigungsschnittstelle befindet sich dann am Aufbauteil und kann mittels des Drehantriebs verschwenkt werden. Beispielsweise ist eine Verschwenkung um eine senkrecht zur durch die Befestigungsschnittstelle aufgespannten Schnittstellenebene liegenden Schwenkachse möglich. Dadurch kann also an der Befestigungsschnittstelle auch zusätzlich noch eine Schwenkbewegung abgegriffen werden. Es ist beispielsweise möglich ein Schwenkantriebsmodul vorzusehen, das einerseits mit dem Andockteil befestigt ist und andernends die verschwenkbare Befestigungsschnittstelle trägt.

Bei einem nicht dargestellten alternativen Ausführungsbeispiel der erfindungsgemäßen Handhabungsvorrichtung sind anstelle der Spindelantriebe Zahnriemenantriebe eingesetzt, wobei hier linear am Zahnriemen geführte Führungsschlitten vorgesehen sein können.

Die Handhabungsvorrichtung 11 wird wie erwähnt vorzugsweise zur Handhabung von Karosserieblechteilen verwendet. Beispielsweise können die Karosseriebleche mittels der Handhabungsvorrichtung 11 von einer Schweißstation in die nachgeordnete nächste Schweißstation umpositioniert werden. Es besteht deshalb die Notwendigkeit, die Positionier-Stellantriebe, insbesondere Spindelantriebe 19, 20, 21 auch in einer solchen Schweißatmosphäre einsetzen zu können. Es besteht deshalb der Bedarf, die Positionier-Stellantriebe, insbesondere Spindelantriebe 19, 20 21 durch geeignete Schutzabdeckungen 48 gegen Schweißspritzer zu schützen. Zur großflächigen Schutzabdeckung werden hierfür schweißspritzerresistente Bleche 48 verwendet. Zur Erzielung der Schweißspritzerresistenz können diese Bleche im Falle von Stahlblechen eine brünierte Oberfläche aufweisen, beispielsweise mit einer Öl-Beschichtung versehen sein, so dass die Schweißspritzer daran abperlen. Im Falle von Aluminium-Blechen kann eine Eloxierung bzw. eine Pulverbeschichtung die gleiche Wirkung erzielen. Wie in den Figuren 1 bis 4 zu sehen, sind derartige Bleche 48 insbesondere an der Vorderseite des Modulgehäuses 16, an der Vorderseite des Gehäuses des dritten Spindelantriebs 23 und zur Ummantelung der Riemengetriebe vorgesehen. Da sowohl am Modulgehäuse 16 als auch am Gehäuse 39 bewegte Teile vorhanden sind, die aus den Gehäusen herausgeführt sind ist eine Komplettkapselung nicht möglich. Daher sind zur Schutzabdeckung im Bereich der bewegten Teile Metallbürsten 49, beispielsweise Messingbürsten, vorgesehen, die von den bewegten Teilen, beispielsweise den Führungsschlitten 22, 23 oder dem Andockteil 46, überfahren werden können.

Zur Einstellung der gewünschten Sollposition der Befestigungsschnittstelle 17 eines jeweiligen Arbeitsmoduls 14 werden die Führungsschlitten 22, 23, 24 der Spindelantriebe 19, 20, 21 zunächst in ihre Startposition gefahren. Diese Startposition wird dann mittels den Näherungsschaltern 43, 44 detektiert und via Steuersignal dem Steuergerät übermittelt.

Anschließend wird nun jeder Spindelantriebe 19, 20 und 21 innerhalb eines Arbeitsmoduls 14 angesteuert und mittels eines Steuersignals wird eine bestimmte Stellstrecke vorgegeben. Die Spindelmotoren 28, 34, 45 werden aktiviert, wodurch die Führungsschlitten 22, 23, 24 über die Stellspindeln an die gewünschten Stellpositionen gefahren werden. Sind diese Stellpositionen erreicht, so schalten die Spindelmotoren ab und die Führungsschlitten sind in dieser Position ortsfest fixiert, das heißt eine Verstellung der Stellposition ohne Bewegung der Spindel ist nicht möglich. Das System ist sozusagen "selbsthemmend" ausgelegt.

Im Einzelnen wird bei waagrechter Lage der Trägereinheit 12 zum Verfahren der Befestigungsschnittstelle 17 in x-Richtung der erste und zweite Führungsschlitten 22, 23 gleichgerichtet und mit gleichem Betrag der Stellstrecke bewegt. Dadurch wird lediglich eine Bewegung der Befestigungsschnittstelle 17 in x-Richtung erzielt, während eine Bewegung in y-Richtung nicht stattfindet. Soll nun eine Bewegung in x- und y-Richtung stattfinden, also in der xy-Ebene, so werden der erste und zweite Führungsschlitten 22, 23 mit unterschiedlichem Betrag der jeweiligen Stellstrecken verfahren. Soll lediglich eine Bewegung in y-Richtung erzeugt werden, so werden die beiden Führungsschlitten 22, 23 mit gleichem Betrag der Stellstrecken aufeinander zu oder voneinander weg bewegt. Die Bewegung in y-Richtung wird also über das Scherenhub-Gestänge 37 erzeugt, an deren Ende der dritte Spindelantrieb 21 sitzt. Der Führungsschlitten 24 des dritten Spindelantriebs 21 kann unabhängig von den anderen beiden Führungsschlitten 22, 23 in die gewünschte z-Position verfahren werden. Insgesamt sind derartige Bewegungen an allen Arbeitsmodulen 14 der Handhabungsvorrichtung 11 durchführbar und zwar bei Bedarf getrennt voneinander, wodurch die Befestigungsschnittstelle 11 unabhängig voneinander in die jeweilige Sollposition positioniert werden können.

## Patentansprüche

1. Handhabungsvorrichtung zur Handhabung von Teilen, insbesondere Karosserieblechen, mit einer Trägereinheit (12), die eine Kopplungsstelle (13) zur Ankopplung an einen Roboterarm eines Roboters und mehrere jeweils eine Befestigungsschnittstelle (17) zur Befestigung eines Arbeitsgerätes (18) wie Vakuumsauggreifer oder dergleichen, aufweisende Arbeitsmodule (14) aufweist, wobei jedem Arbeitsmodul (14) Einstellmittel zur Positionseinstellung der Befestigungsschnittstelle (17) zugeordnet sind, wobei die Einstellmittel mehrere mittels von einem Steuergerät stammenden elektrischen Steuerbefehlen ansteuerbare Positionier-Stellantriebe (19, 20, 21) aufweisen, die es ermöglichen, die Befestigungsschnittstelle (17) in x-, y- und z-Richtung eines durch x-, y- und z-Koordinaten aufgespannten kartesischen Koordinatensystems zu verlagern, wobei die Positionier-Stellantriebe derart ausgebildet sind, dass die Befestigungsschnittstelle (17) durch Bewegung in x-, y- und/oder z-Richtung in eine gewünschte Sollposition positionierbar ist, **dadurch gekennzeichnet, dass** die Positionier-Stellantriebe (19, 20, 21) eines jeden Arbeitsmoduls (14) derart ausgebildet sind, dass die Befestigungsschnittstelle (17) eines jeweiligen Arbeitsmoduls (14) unabhängig von den Befestigungsschnittstellen (17) der anderen Arbeitsmodule (14) in die gewünschte Sollposition positionierbar ist.

2. Handhabungsvorrichtung nach Anspruch 1, **dadurch gekennzeichnet, dass** die Positionier-Stellantriebe (19, 20, 21) eines jeweiligen Arbeitsmoduls (14) unabhängig voneinander verfahrbare Stellelemente (22, 23, 24) aufweisen, die jeweils einerseits über Kopplungsmittel (33) mit einer Antriebseinheit (28, 34, 45) gekoppelt sind und andererseits eine Abgriffsschnittstelle (35, 36) zum Abgreifen der in x-, y- oder z-Richtung gerichteten Stellelementbewegung oder die Befestigungsschnittstelle (17) aufweisen.

3. Handhabungsvorrichtung nach Anspruch 2, **dadurch gekennzeichnet, dass** ein jeweiliges Arbeitsmodul (14) einen ersten Positions-Stellantrieb (19) und einen zweiten Positions-Stellantrieb (20) mit ersten bzw. zweiten Stellelementen (22, 23) zum Verfahren in der xy-, xz- oder yz-Ebene bei waagerechter Lage der Trägereinheit (12) und einen dritten Positionier-Stellantrieb (19, 20, 21) zum Verfahren in der z- bzw. y- bzw. x-Richtung bei waagrechter Lage der Trägereinheit (12) aufweist.

4. Handhabungsvorrichtung nach Anspruch 3, **dadurch gekennzeichnet, dass** die ersten und zweiten Stellelemente (22, 23) in der gleichen Raumrichtung unabhängig voneinander verfahrbar sind, wobei deren Abgriffsschnittstellen (35, 36) über eine Kopplungsbrücke (37) zur Erzielung einer Bewegung in einer senkrecht zur Stellelementbewegung des ersten bzw. zweiten Stellelements gerichteten Raumrichtung miteinander gekoppelt sind.

5. Handhabungsvorrichtung nach Anspruch 4, **dadurch gekennzeichnet, dass** als Kopplungsbrücke ein Scherenhub-Gestänge (37) vorgesehen ist.

6. Handhabungsvorrichtung nach einem der Ansprüche 2 bis 5, **dadurch gekennzeichnet, dass** jedem Stellelement (22, 23, 24) eine entlang seines Verfahrwegs liegende Startposition zugeordnet ist, der Positionserfassungsmittel zur Erfassung des Überfahrens der Startposition durch das Stellelement (22, 23, 24) zugeordnet sind.

7. Handhabungsvorrichtung nach Anspruch 6, **dadurch gekennzeichnet, dass** als Positionserfassungsmittel Positionssensoren, insbesondere Näherungsschalter, vorgesehen sind.

8. Handhabungsvorrichtung nach einem der vorhergehenden Ansprüche, **dadurch gekennzeichnet**, das die Positionier-Stellantriebe von motorischen Linearantrieben (19, 20, 21) gebildet sind.

9. Handhabungsvorrichtung nach Anspruch 8, **dadurch gekennzeichnet, dass** die motorischen Linearantriebe vom Spindelantrieb (19, 20, 21) gebildet sind, mit jeweils einem Kopplungsmittel in Form einer Stellspindel (33), die einerseits von einer Antriebseinheit in Form eines Spindelmotors (28, 34, 45) über Antriebsmittel (29) antreibbar ist und an der andererseits das Stellelement (22, 23, 24) linear beweglich geführt ist.

10. Handhabungsvorrichtung nach Anspruch 9, **dadurch gekennzeichnet, dass** als Antriebsmittel ein Riemengetriebe (29) vorgesehen ist.

11. Handhabungsvorrichtung nach einem der Ansprüche 2 bis 8, **dadurch gekennzeichnet, dass** die Stellelemente (22, 23, 24) als an einer zugeordneten Führungsschiene linear beweglich geführte Führungsschlitten (22, 23, 24) ausgebildet sind.

12. Handhabungsvorrichtung nach einem der vorhergehenden Ansprüche, **dadurch gekennzeichnet, dass** den Positionier-Stellantrieben (19, 20, 21) Schutzabdeckungen (47) zu deren Schutz vor Schweißspritzern zugeordnet sind.

13. Handhabungsvorrichtung nach Anspruch 12, **dadurch gekennzeichnet, dass** die Schutzabdeckungen von schweißspritzerresistenten Blechen (47) und/oder Metallbürsten (48) gebildet sind.

14. Handhabungsvorrichtung nach Anspruch 13, **dadurch gekennzeichnet, dass** es sich bei den schweißspritzerresistenten Blechen um brünierte Stahlbleche und/oder um eloxierte oder pulverbeschichtete Aluminiumbleche handelt.

15. Handhabungsvorrichtung nach einem der vorhergehenden Ansprüche, **dadurch gekennzeichnet, dass** der BefestigungsSchnittstelle (17) eines jeweiligen Arbeitsmoduls (14) ein Drehantrieb zugeordnet ist zur Verschwenkung der Befestigungsschnittstelle, vorzugsweise um eine im Wesentlichen senkrecht zur durch die Befestigungsschnittstelle (17) aufgespannten Schnittstellenebene verlaufenden Schwenkachse.

16. Handhabungsvorrichtung nach einem der vorhergehenden Ansprüche, **dadurch gekennzeichnet, dass** sie wenigstens ein Steuergerät (50) zur Ansteuerung der Positionier-Stellantriebe (19, 20, 21) aufweist.

17. Handhabungsvorrichtung nach Anspruch 16, **dadurch gekennzeichnet, dass** das wenigstens eine Steuergerät (50) an der Trägereinheit (12) angeordnet ist.

## Claims

1. Handling device for the handling of parts, in particular body panels, with a carrier unit (12) which has a coupling point (13) for coupling to the robot arm of a robot, and several operating modules (14) each with a mounting interface (17) for the mounting of an operating device (18) such as a vacuum suction gripper or the like, wherein each operating module (14) is assigned adjusting means for the position setting of the mounting interface (17), wherein the setting means have several positioning actuators (19, 20, 21) actuable by means of electrical control commands originating from a control unit and which make it possible for the mounting interface (17) to shift in the x, y and z directions of a Cartesian coordinate system spanned by x, y and z coordinates, wherein the positioning actuators are so designed that the mounting interface (17) may be positioned in a desired position through movement in the x, y and/or z direction, **characterised in that** the positioning actuators (19, 20, 21) of each operating module (14) are so designed that the mounting interface (17) of each operating module (14) may be positioned in the desired position independently of the mounting interfaces (17) of the other operating modules (14).

2. Handling device according to claim 1, **characterised in that** the positioning actuators (19, 20, 21) of each operating module (14) have positioning elements (22, 23, 24) which travel independently of one another, each on the one hand coupled to a drive unit (28, 34, 45) through coupling means (33) and on the other hand having a tapping interface (35, 36) for tapping the positioning element movement directed in the x, y or z direction, or the mounting interface (17).

3. Handling device according to claim 2, **characterised in that** each operating module (14) has a first positioning actuator (19) and a second positioning actuator (20) with first and second positioning elements (22, 23) for movement in the xy, xz or yz plane with the carrier unit (12) in the horizontal position, and a third positioning actuator (19, 20, 21) for movement in the z or y or x direction with the carrier unit (12) in the horizontal position.

4. Handling device according to claim 3, **characterised in that** the first and second positioning elements (22, 23) are able to move independently of one another in the same direction in space, wherein their tapping interfaces (35, 36) are coupled together via a coupling bridge (37) to obtain a movement in a direction in space aligned at right-angles to the positioning element movement of the first and second positioning element.

5. Handling device according to claim 4, **characterised in that** a scissors linkage (37) is provided as coupling bridge.

6. Handling device according to any of claims 2 to 5, **characterised in that** each positioning element (22, 23, 24) is assigned a start position lying along its movement path, to which are assigned position detection means to detect overshooting of the start position by the positioning element (22, 23, 24).

7. Handling device according to claim 6, **characterised in that** position sensors, in particular proximity switches, are provided as position detection means.

8. Handling device according to any of the preceding claims, **characterised in that** the positioning actuators are formed by motorised linear drives (19, 20, 21).

9. Handling device according to claim 8, **characterised in that** the motorised linear drives are formed by a spindle drive (19, 20, 21), each with coupling means in the form of an adjusting screw (33) and on the one hand drivable through drive means (29) by a drive unit in the form of a spindle motor (28, 34, 45), while on the other hand the positioning element (22, 23, 24) has linear movement guidance.

10. Handling device according to claim 9, **characterised in that** a belt drive (29) is provided as drive means.

11. Handling device according to any of claims 2 to 8, **characterised in that** the positioning elements (22, 23, 24) are in the form of guiding slides (22, 23, 24) with linear movement guidance along an assigned guide rail.

12. Handling device according to any of the preceding claims, **characterised in that** the positioning actuators (19, 20, 21) are assigned protective covers (47) to protect them from welding spatter.

13. Handling device according to claim 12, **characterised in that** the protective covers are formed by welding spatter-proof plates (47) and/or metal brushes (48).

14. Handling device according to claim 13, **characterised in that** the welding spatter-proof plates are black-finished sheet-steel plates and/or anodised or powder-coated aluminium sheets.

15. Handling device according to any of the preceding claims, **characterised in that** the mounting interface (17) of each operating module (14) is assigned a rotary drive for swivelling the mounting interface, preferably around a swivel axis running substantially at right-angles to the interface plane spanned by the mounting interface (17).

16. Handling device according to any of the preceding claims, **characterised in that** it has one or more control units (50) for controlling the positioning actuators (19, 20, 21).

17. Handling device according to claim 16, **characterised in that** the control unit or units (50) is or are mounted on the carrier unit (12).

## Revendications

1. Dispositif de manutention pour la manutention de pièces, en particulier de tôles de carrosserie, comprenant une unité porteuse (12) qui présente un point de couplage (13) permettant le couplage à un bras de robot d'un robot et plusieurs modules de travail (14) présentant respectivement une interface de fixation (17) pour la fixation d'un dispositif de travail (18) comme une pince d'aspiration à vide ou similaire, chaque module de travail (14) ayant des moyens de commande pour régler la position de l'interface de fixation (17), les moyens de commande présentant plusieurs mécanismes de commande de position (19, 20, 21) pouvant être commandés par des ordres de commande électriques provenant d'un dispositif de commande, lesquels mécanismes permettent de déplacer l'interface de fixation (17) dans la direction x, y et z d'un système de coordonnées cartésien défini par des coordonnées x, y et z, les mécanismes de commande de position étant formés de sorte que l'interface de fixation (17) peut être positionnée par un mouvement suivant la direction x, y et et/ou z dans une position de consigne souhaitée, **caractérisé en ce que** les mécanismes de commande de position (19, 20, 21) d'un module de travail (14) respectif sont formés de sorte que l'interface de fixation (17) de chaque module de travail (14) peut être positionnée suivant la position de consigne souhaitée indépendamment des interfaces de fixation (17) des autres modules de travail (14).

2. Dispositif de manutention selon la revendication 1, **caractérisé en ce que** les mécanismes de commande de position (19, 20, 21) de chaque module de travail (14) présentent des éléments de commande (22, 23, 24) mobiles indépendamment les uns des autres qui sont couplés respectivement d'une part par des moyens de couplage (33) à une unité d'entraînement (28, 34, 45) et présentent d'autre part une interface de saisie (35, 36) pour saisir le mouvement de l'élément de commande dirigé dans la direction x, y ou z ou l'interface de fixation (17).

3. Dispositif de manutention selon la revendication 2, **caractérisé en ce que** chaque module de travail (14) présente un premier mécanisme de commande de position (19) et un deuxième mécanisme de commande de position (20) avec des premier respectivement deuxième éléments de commande (22, 23) pour le déplacement dans le plan xy, xz ou yz dans la position horizontale de l'unité porteuse (12) et un troisième mécanisme de commande de position (19, 20, 21) pour le déplacement dans la direction z respectivement y respectivement x en position horizontale de l'unité porteuse (12).

4. Dispositif de manutention selon la revendication 3, **caractérisé en ce que** les premier et deuxième éléments de commande (22, 23) sont déplaçables dans la même direction spatiale indépendamment l'un de l'autre, leurs interfaces de saisie (35, 36) étant couplées l'une à l'autre par un pont de couplage (37) pour obtenir un mouvement dans une direction spatiale perpendiculaire au mouvement de l'élément de commande du premier respectivement deuxième élément de commande.

5. Dispositif de manutention selon la revendication 4, **caractérisé en ce qu'**en tant que pont de couplage, une tringlerie d'élévation à ciseaux (37) est prévue.

6. Dispositif de manutention selon l'une des revendications 2 à 5, **caractérisé en ce que** chaque élément de commande (22, 23, 24) a une position de départ le long de sa trajectoire de déplacement, avec des moyens de détection de la position pour détecter le dépassement de la position de départ par l'élément de commande (22, 23, 24).

7. Dispositif de manutention selon la revendication 6, **caractérisé en ce qu'**en tant que moyens de détection de la position, des capteurs de position, en particulier des détecteurs de proximité, sont prévus.

8. Dispositif de manutention selon l'une des revendications précédentes, **caractérisé en ce que** les mécanismes de commande de position sont des mécanismes linéaires motorisés (19, 20, 21).

9. Dispositif de manutention selon la revendication 8, **caractérisé en ce que** les mécanismes linéaires motorisés sont formés par le mécanisme à broche (19, 20, 21) comprenant respectivement un moyen de couplage sous la forme d'une broche de commande (33) qui peut être commandée d'une part par une unité d'entraînement sous forme d'un moteur à axe (28, 34, 45) via des moyens de transmission (29) et sur laquelle d'autre part l'élément de commande (22, 23, 24) est guidé de manière mobile et linéaire.

10. Dispositif de manutention selon la revendication 9, **caractérisé en ce qu'**en tant que moyen de transmission, une transmission par courroie (29) est prévue.

11. Dispositif de manutention selon l'une des revendications 2 à 8, **caractérisé en ce que** les éléments de commande (22, 23, 24) sont formés en tant que coulisseaux de guidage (22, 23, 24) mobiles de manière linéaire sur un rail de guidage qui leur est associé.

12. Dispositif de manutention selon l'une des revendications précédentes, **caractérisé en ce que** les mécanismes de commande de position (19, 20, 21) possèdent des recouvrements de protection (47) pour les protéger des éclaboussures de soudure.

13. Dispositif de manutention selon la revendication 12, **caractérisé en ce que** les recouvrements de protection sont formés de tôles résistantes aux éclaboussures de soudure (47) et/ou de brosses métalliques (48).

14. Dispositif de manutention selon la revendication 13, **caractérisé en ce que** les tôles résistantes aux éclaboussures de soudure sont des tôles d'acier brunies et/ou des tôles d'aluminium anodisées ou revêtues par pulvérisation.

15. Dispositif de manutention selon l'une des revendications précédentes, **caractérisé en ce que** l'interface de fixation (17) de chaque module de travail (14) possède un mécanisme de rotation pour faire pivoter l'interface de fixation, de préférence autour d'un axe de pivotement sensiblement perpendiculaire au plan d'interface défini par l'interface de fixation (17).

16. Dispositif de manutention selon l'une des revendications précédentes, **caractérisé en ce qu'**il présente au moins un dispositif de commande (50) pour commander les mécanismes de commande de position (19, 20, 21).

17. Dispositif de manutention selon la revendication 16, **caractérisé en ce que** le dispositif de commande (50) au nombre d'un au moins est disposé sur l'unité porteuse (12).
